# EUROPÄISCHE PATENTSCHRIFT

(11) **EP 1 508 181 B1**
(45) Veröffentlichungstag und Bekanntmachung des Hinweises auf die Patenterteilung: **03.01.2007**
(21) Anmeldenummer: 03732431.6
(22) Anmeldetag: 20.05.2003
(51) Int. Cl.: H01M 8/10, H01M 8/02, H01M 2/14, H01M 4/88, C25B 9/10

(54) **PROTONENLEITENDE POLYMERMEMBRAN SOWIE VERFAHREN ZU DEREN HERSTELLUNG**
PROTON-CONDUCTING POLYMER MEMBRANE AND METHOD FOR THE PRODUCTION THEREOF
MEMBRANE POLYMERE CONDUISANT LES PROTONS ET PROCEDE DE FABRICATION

(30) Priorität: 29.05.2002 DE 10224452
(43) Veröffentlichungstag der Anmeldung: 23.02.2005
(73) Patentinhaber: Fraunhofer-Gesellschaft zur Förderung der angewandten Forschung e.V., 80686 München (DE)
(72) Erfinder: HAHN, Robert, 13355 Berlin (DE); WAGNER, Stefan, 10407 Berlin (DE); SCHMITZ, Andreas, 79110 Freiburg (DE)
(74) Vertreter: Pfenning, Meinig & Partner GbR
(86) Internationale Anmeldenummer: PCT/EP2003/005304
(87) Internationale Veröffentlichungsnummer: WO 2003/100882

(56) Entgegenhaltungen:
- EP-A- 0 275 465
- EP-A- 1 037 295
- WO-A-96/24958
- DE-C- 19 705 469
- US-A- 5 759 712

## Beschreibung

Die vorliegende Erfindung betrifft eine protonenleitende Polymermembran sowie ein Verfahren zu deren Herstellung.

Brennstoffzellensysteme gewinnen zunehmend an Bedeutung bei der Spannungsversorgung mobiler Elektro- bzw. Elektronikgeräte. Zur Erlangung handelsüblicher Spannungen werden zur Addition von Einzelspannungen mehrere Brennstoffzellen in Serie geschaltet. Bei einer planaren Brennstoffzellenanordnung wird dies realisiert, indem mehrere in einer Ebene angeordnete Brennstoffzelleneinheiten seriell verschaltet werden. Jede Brennstoffzelleneinheit verfügt kathoden- und anodenseitig über je eine Gasverteilerstruktur und eine Diffusionsschicht. Diese beiden Reaktionsräume sind getrennt durch eine Membranelektrodeneinheit (MEA). Dies ist eine protonenleitende Polymermembran, welche im Bereich der Reaktionsräume katalytisch beschichtet ist. Eine bekannte Anordnung zur Serienverschaltung von Brennstoffzelleneinheiten ist die sogenannte "Streifenmembran-Brennstoffzelle". Bei dieser durchstößt eine Querleiterstruktur die Membranebene und verbindet dadurch die Kathodenseite einer ersten Brennstoffzelleneinheit mit der Anodenseite der benachbarten Brennstoffzelleneinheit. Das Hindurchführen eines Querleiters durch die Membranebene führt allerdings leicht zu Undichtigkeiten des Brennstoffzellensystems.

Für eine gute Abdichtung und aus fertigungstechnischen Gründen ist es daher vorteilhaft, die Reäktionsräume der Anodenseite von der Kathodenseite mittels einer durchgehenden Polymermembran zu trennen, welcher aber immer noch über katalytische Beschichtungen im Bereich der Reaktionsräume verfügen muß.

Hierzu sind Polymermembrane bekannt, welche in segmentierten Bereichen katalytisch beschichtet sind. Die Katalysatorschichten können hierbei segmentweise mittels Aufwalzen oder Heißverpressen auf der Polymermembran aufgetragen werden. Bei diesen mechanischen Aufbringungsverfahren sind zwischen den einzelnen benachbarten Katalysatorsegmenten Mindestabstände von mehreren Millimetern (etwa 3 mm) notwendig, um eine klare elektrische Trennung der einzelnen Segmente voneinander zu erreichen. Es entstehen zusätzliche Probleme dadurch, daß beim Auftrag (z.B. mittels Heißverpressen) sich die Membran erhitzt bzw. verformt und somit eine exakte Positionierung von Katalysatorsegment und Membran erschwert ist.

Ein grundsätzlicher Nachteil der bekannten Polymermembrane mit Katalysatorsegmenten ist also, daß aufgrund der einzuhaltenden großen Mindestabstände zwischen den Katalysatorsegmenten Fläche ungenutzt bleibt, welche somit nicht zur Spannungserzeugung in miniaturisierten planaren Brennstoffzellen zur Verfügung steht.

Der vorliegenden Erfindung liegt daher die Aufgabe zugrunde, eine mit Katalysatorsegmenten versehene Polymermembran bzw. ein Verfahren zu deren Herstellung bereitzustellen, welche die Gesamtfläche der Polymermembran möglichst effizient nutzbar macht und somit den Wirkungsgrad insbesondere kleinbauender planarer Brennstoffzellenanordnungen erhöht.

Dadurch, daß bei dem erfindungsgemäßen Verfahren eine homogen auf der Polymermembran aufgetragene Katalysatorschicht zur Schaffung voneinander getrennten Katalysatorsegmenten bereichsweise entfernt wird, kann mittels subtraktiver Strukturierungstechniken auf eine exakte Weise nur sehr wenig der vorhandenen Katalysatorschicht abgetragen werden, um somit eine elektrische Kontaktierung nebeneinander liegender Katalysatorsegmente, welche sich auf derselben Seite einer Polymermembran befinden, sicher zu verhindern. Somit ist es möglich, den Abstand zwischen (z.B. rechteckförmigen) Segmenten entlang einer beliebigen Kante dieser Segmente auf unter 0,5 mm zu verringern.

Der bereichsweise Abtrag der Katalysatorschicht erfolgt durch Laserablation. Hierbei sind die Parameter der Polymermembran (Material, Dicke) und des Lasers (Intensität, Wellenlänge) so zu wählen, daß die Polymermembran eine so große Transmission aufweist, daß eine beidseitig der Polymermembran liegende Katalysatorschicht durch Laserbestrahlung von lediglich einer Seite der beschichteten Polymermembran aus beidseitig bereichsweise entfernbar ist. Es ist selbstverständlich aber auch möglich, die Verfahrensparameter so einzustellen, daß die Katalysatorschicht lediglich auf einer Seite der Polymermembran entfernbar ist (z.B. wenn auf den gegenüberliegenden Seiten der Polymermembran leicht abweichende Strukturen hergestellt werden sollen). Unter Umständen ist ein Zusatz von Schutzgas sinnvoll, um Beschädigungen der Polymermembran bzw. der Katalysatorschicht zu vermeiden. Alternativ - und unter Umständen verfahrenstechnisch einfacher - ist es möglich, die MEA mit einer transparenten Scheibe bzw. Folie abzudecken, um den Sauerstofftransport zu unterbinden.

Die Erfindung ist auf mit allen üblichen Herstellungsprozessen hergestellte Membranelektrodeneinheiten (MEA) anwendbar. Daher kann eine für den Anwendungsfall in Hinblick auf elektrochemische Aktivität, Protonenleitfähigkeit, Methanolpermeation etc. besonders geeignete Membranelektrodeneinheiten verwendet werden, welche mittels des erfindungsgemäßen Verfahrens segmentierbar ist.

Dies ist auch sehr kostengünstig möglich. Die bekannten Verfahren nach dem Stand der Technik, mit denen eine Segmentierung der Katalysatorschicht auf einer Polymermembran möglich ist, bringen erhebliche Investitionskosten mit sich, die insbesondere bei jeder Designänderung neu durchgeführt werden müssen. Mittels des erfindungsgemäßen Verfahrens können MEAs zu deutlich geringeren Kosten segmentiert werden, da nur ein Arbeitsgang in einer serientauglichen Technologie vorliegt.

Vorteilhafte Weiterbildungen der vorliegenden Erfindung werden in den abhängigen Patentansprüchen beschrieben.

Weiter vorteilhafte Verfahren sehen vor, daß der bereichsweise Abtrag mit üblichen Verfahren der Mikrostrukturierungstechnik, etwa Sputterätzen, Ionenstrahlätzen, reaktives Ionenstrahlätzen, Plasmaätzen oder Barrel-Ätzen erfolgt.

Für die Katalysatorschicht gelten prinzipiell keine Einschränkungen, es können handelsübliche Fertigprodukte, z.B. eine Nafion®-Polymermembran (möglich sind auch andere Membran-Materialien, z.B. Polyäther-Ätherketon (PEEK), PBI, PEEK mit sulfonisiertem Co-Polymer) mit beliebigen Katalysatorschichten genutzt werden. Üblicherweise sind diese Katalysatorschichten hoch porös und besteht aus Edelmetallpartikeln (vorzugsweise Pt, Pt-Ru), Graphit sowie einen protonenleitenden Polymer. Die Dicke der unabgetragenen homogenen Katalysatorschicht, welche einseitig oder zweiseitig auf der Polymermenbran aufgetragen sein kann, beträgt vor dem bereichsweisen Abtragen vorzugsweise einheitlich 5 - 10 µm.

Eine weiter vorteilhafte Weiterbildung sieht vor, daß die ehemals homogen und vollflächig beschichtete Polymermembran so zweidimensional segmentiert wird, daß sich auf ihr verschiedene Anordnungen von Katalysatorsegmenten für jeweils einzelne Brennstoffzelleneinheiten ergeben. So können auf diese Weise beliebige Felder konfiguriert werden, etwa NxM-Felder (N,M = ganzzahlig und beliebig) von Rechtecken/Quadraten, Dreiecken etc. Hierbei ist wesentlich, daß zur optimalen Raumausnutzung der Mindestabstand zwischen den Kanten dieser einzelnen geometrischen Figuren lediglich 0,5 mm bzw. noch weniger betragen muß. Selbstverständlich ist es jedoch auch möglich, andere geometrische Figuren mit nicht geraden Kanten (ovale Formen, Kreise, gerundete Figuren, Figuren mit gerundeten Kanten etc.) vorzusehen.

Eine weitere vorteilhafte Weiterbildung sieht vor, daß im Bereich zwischen den Katalysatorsegmenten eine vollständig Entfernung der Katalysatorschicht bis hinunter auf die Polymermembran erfolgt. Hierdurch sind die einzelnen Katalysatorsegmente sicher voneinander elektrisch isoliert. Es ist jedoch auch denkbar, daß im Bereich zwischen den Katalysatorsegmenten der Abtrag der Katalysatorschicht nicht vollständig ist. In diesem Falle ist darauf zu achten, daß der elektrische Widerstand zwischen zwei benachbarten Katalysatorsegmenten im Vergleich zu dem elektrischen Widerstand der elektrischen Verbindungsleitung zwischen den beiden benachbarten Brennstoffzelleneinheiten zur Serienschaltung der Brennstoffzelleneinheiten hoch ist, so daß sich lediglich sehr geringe Leistungsverluste durch Leckströme einstellen.

Weitere vorteilhafte Weiterbildungen sehen vor, daß zusätzliche Maßnahmen zur Verhinderung eines Ionenstroms zwischen zwei benachbarten Brennstoffzelleneinheiten getroffen werden, welche benachbarte Katalysatorsegmente aufweisen. So kann vorgesehen werden, daß der Abstand zwischen den einzelnen benachbarten Katalysatorsegmenten zweiter benachbarter Brennstoffzelleneinheiten zehnmal größer ist als die Dicke der Polymermembran ohne Katalysatorschicht, hierdurch werden die "Querleitungsverluste" minimiert.

Es ist jedoch auch möglich, durch Elektrodenätzung oder lokale thermische Behandlung die Ionenstromleitfähigkeit der Polymermembran verhindert oder beseitigt wird (z.B. durch thermische Behandlung mittels Laser, Ultraschallschweißen etc.).

Ferner kann der Ionentransport durch partielle Hydrophobierung an den Stellen, an denen die Katalysatorschicht abgetragen ist, unterbunden werden. Ein hydrophobes Polymer (z.B. Teflon®) kann hierzu mittels Siebdruck aufgetragen werden, auch Aufsprühen ist als Auftragungstechnik möglich, wobei die Katalysatorsegmente mit einer Maske bedeckt werden. Anschließend wird das Polymer lokal mittels Laser- oder Plasmabehandlung gesintert.

Weitere vorteilhafte Weiterbildungen der vorliegenden Erfindung werden in den übrigen abhängigen Ansprüchen behandelt.

Die vorliegende Erfindung wird nun anhand mehrerer Figuren erläutert. Es zeigen:
- Fig. 1a: einen Querschnitt einer erfindungsgemäßen, mit Katalysatorsegmenten beidseitigen belegten Polymermembran,
- Fig. 1b: ein elektrisches Schaltbild der in Fig. 1a gezeigten Anordnung,
- Fign. 2 und 3: verschiedene Ausführungsformen von Polymermembranen mit Katalysatorsegmenten in der Draufsicht.

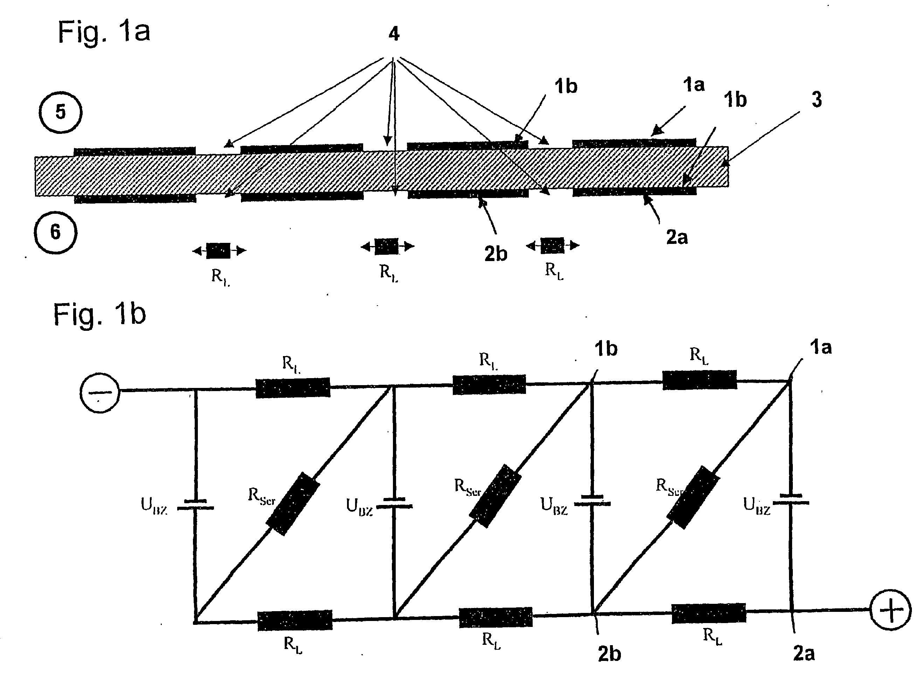

Fig. 1a zeigt einen Querschnitt durch eine erfindungsgemäße Polymermembran 3, auf deren Oberseite und Unterseite jeweils Katalysatorsegmente angeordnet sind. Diese Katalysatorsegmente (1a, 1b, 2a, 2b) gehören zu benachbarten Brennstoffzelleneinheiten (Katalysatorsegment 1a und 2a bilden eine am rechten Rand in Fig. 1a liegende Brennstoffzelleneinheit, links daneben die mit den Katalysatorsegmenten 1b und 2b versehene Brennstoffzelleneinheit). Die Polymermembran 3 ist aus einem protonenleitfähigen Polymermaterial (z.B. Nafion®). Sie ist ein elektrischer Isolator. Die Schichtdicke der jeweiligen Katalysatorsegmente 1a, 1b, 2a, 2b beträgt zwischen 5 und 10 µm einheitlich.

Die in Fig. 1a gezeigte Polymermembran mit Katalysatorsegmenten ist aus einer ehemals auf der Ober- und Unterseite mit durchgängigen, homogenen Katalysatorschichten gleichbleibender Dicke hervorgegangen, wobei in den Zwischenbereichen 4 die Katalysatorschicht mit der oben zitierten Methode entfernt worden ist.

Die Katalysatorschicht kann, wie bereits eingangs beschrieben, aus einem beliebigen üblichen Material sein, sie ist im Allgemeinen hochporös und aus Edelmetallpartikeln (Pt, Pt-Ru etc.), Graphit und einem protonenleitenden Polymer, alternativ kann auf sämtlichen Katalysatorsegmenten auf der von der Polymermembran jeweils abweisenden Seite zusätzlich noch eine Diffusionsschicht angebracht sein zur Feinverteilung von z.B. Sauerstoff und molekularem Wasserstoff auf den Katalysatorsegmenten. Es ist also auch möglich, bei einer MEA, bei welcher eine Diffusionsschicht bereits aufgebracht - z.B. aufgepreßt - ist, auch diese Diffusionsschicht auf die erfindungsgemäße Weise zu strukturieren.

Die einzelnen Brennstoffzelleneinheiten (gebildet aus z.B. 1a, 2a sowie nebenliegend 1b, 2b) sind auf nicht dargestellte Weise elektrisch miteinander in Serie geschaltet, so ist z.B. auf der Kathodenseite 6 das Katalysatorsegment 2b elektrisch mit dem Katalysatorsegment 1a auf der Anodenseite 5 verbunden (siehe auch Fig. 1b).

Die Zwischenbereiche 4 haben in horizontaler Richtung (also im Abstand zwischen 1b und 1a bzw. 2b und 2a jeweils einen Abstand kleiner als 0,5 mm, vorzugsweise kleiner als 0,3 mm, so daß senkrecht zur Blattebene (d.h. Membranebene) der Abstand dieser Katalysatorsegmente vorzugsweise nicht größer ist als dieser Abstand.

In den Zwischenbereichen 4 ist vorliegend die Katalysatorschicht vollständig entfernt. Daher ist der elektrische Widerstand zwischen benachbarten Katalysatorsegmenten 1b und 1a (der Widerstand R_{L}) extrem hoch. Der Widerstand wird tendenziell durch einen größeren Abstand der Katalysatorsegmente voneinander erhöht, es ist hier auch auf geeignetes Feuchtigkeitsmanagement im Betrieb der Brennstoffzelleneinheiten zu achten, da unter Umständen durch Flüssigkeiten der Widerstand zwischen benachbarten Katalysatorsegmenten auf derselben Seite der Polymermembran verringert wird und hierdurch die Leckströme ansteigen können. Auch hierfür ist es günstig, im Bereich zwischen den Katalysatorsegmenten 1b und 1a Hydrophobierungen vorzunehmen, um entsprechende Verluste zu verringern.

Es ist jedoch auch möglich, daß im Zwischenbereich 4 zwischen den Katalysatorsegmenten 1a, 1b der Abtrag der Katalysatorschicht vollständig erfolgt.

In Fig. 1b ist ein zur Fig. 1a gehöriges elektrisches Ersatzschaltbild dargestellt. In den in Fig. 1a gezeigten planaren Brennstoffzelleneinheiten wird deren Serienschaltung realisiert, indem die Kathodenseite (also auf Seite 6) mit der Anodenseite (also Seite 5) der nächsten Brennstoffzelleneinheit außerhalb des Reaktionsraumes elektrisch verbunden wird. Der elektrische Widerstand dieser Kontaktierung wird mit Rₛₑᵣ bezeichnet. Der elektrische Widerstand zwischen zwei benachbarten Katalysatorsegmenten, über den Leckströme fließen können, wird mit R_{L} bezeichnet.

Jede Brennstoffzelleneinheit liefert eine Spannung U_{BZ}. Mittels der Serienverschaltung werden diese Einzelspannungen addiert und an den Enden abgegriffen (mit "+" und "-" in Fig. 1b bezeichnet). Die gewünschte Stromrichtung verläuft zwischen diesen beiden Enden durch jede der Brennstoffzelleneinheiten (gebildet aus 1a, 2a; 1b, 2b etc.) und die Serienwiderstände Rₛₑᵣ. Damit nur minimale Leckströme zwischen benachbarten Segmenten fließen, müßten die Leckwiderstände R_{L} sehr viel größer sein als die Serienwiderstände Rₛₑᵣ (Bedingung: Rₛₑᵣ << R_{L}) . Daher sollte die Katalysatorschicht zwischen den Segmenten möglichst ganz bis zur Polymermembran abgetragen werden, womit die Segmente vollständig voneinander isoliert sind.

Es kann auch eine Restschicht Katalysator stehen bleiben. Beim Ätzen unter bestimmten Prozeßbedingungen bilden sich einzelne Inseln von zurückbleibendem Material aus, die elektrisch teilweise isolierend sind oder elektrisch nicht mehr miteinander verbunden. Damit erhält man bereits einen großen Isolationswiderstand R_{L}, obwohl noch nicht alles Material abgetragen ist.

Hier beträgt R_{Ser} z.B. ca. 1...4 Ohmcm², R_{L} sollte ca. 1000 mal größer sein (Beispiel: R_{L} = 2000 Ohm ist gefordert: bei Zellfläche 1 cm², quadratisch, 200 µm Spaltbreite muß der Flächenwiderstand im geätzten Bereich 100 kOhmcm² groß sein. Ätzt man weniger weg und endet bei 20 kOhmcm², so muß der Mindestabstand entsprechend 1 mm breit sein. Ist die Zellfläche nicht quadratisch sondern z.B. 0,5 x 2 cm², die Spaltlänge damit 2 cm, so muß bei einem Flächenwiderstand im geätzten Bereich von 100 kOhmcm² die Spaltbreite 400 µm betragen.).

Es ist außerdem vorteilhaft, die Katalysatorschicht in den Randbereichen und herum um Öffnungen der MEA abzutragen. Zum einen ist dies vorteilhaft, da bei eventuellen Undichtigkeiten austretendes Wasserstoffgas oder eintretende Luft die Membran entzünden können. Durch die Abtragung der Katalysatorschicht in diesen Bereichen kann die Entzündungsgefahr im Falle einer Undichtigkeit vermindert werden.

Hierzu werden Öffnungen in die MEA eingebracht, als Ein- bzw. Auslaß für die Reaktanden in den Reaktionsraum, wobei die Flußrichtung im Bereich der Öffnung meist senkrecht zu der Ebene der MEA ist. Damit kann Platz eingespart werden gegenüber einem seitlichen Ein- bzw. Auslaß in den Reaktionsraum. Für diesen Zweck werden meist Öffnungen in der MEA verwendet und daher ist es vorteilhaft, für den Falle von Leckagen in den Randbereichen dieser Öffnungen die Katalysatorschicht abzutragen.

Zum zweiten kann durch Oberflächenbehandlung mittels Plasmaätzen und eventuell auch Lasern die Klebeeigenschaften verbessert werden. Dies ist zur Verbesserung der Klebeeigenschaften (Erhöhung der Oberflächenenergie) von Flour-Polymeren ein gängiges Verfahren. Entweder wird dann die Klebeeigenschaft der Katalysatorschicht, in welcher auch das protonenleitende Polymer (nach dem heutigen Stand der Technik sind dies oft fluorierte und sulfonisierte Co-Polymer) eingetragen ist, oder im Falle eines vollständigen Abätzens der Katalysatorschicht die Klebeeigenschaft der Membranoberfläche verbessert.

Daher ist es vorteilhaft, eine Oberflächenbehandlung der MEA in den Randbereichen und um Öffnungen vorzunehmen.

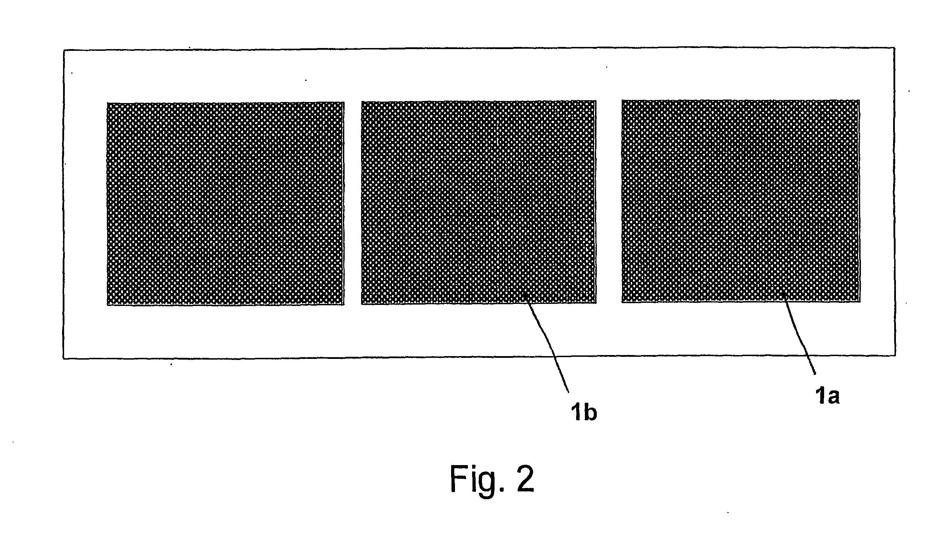

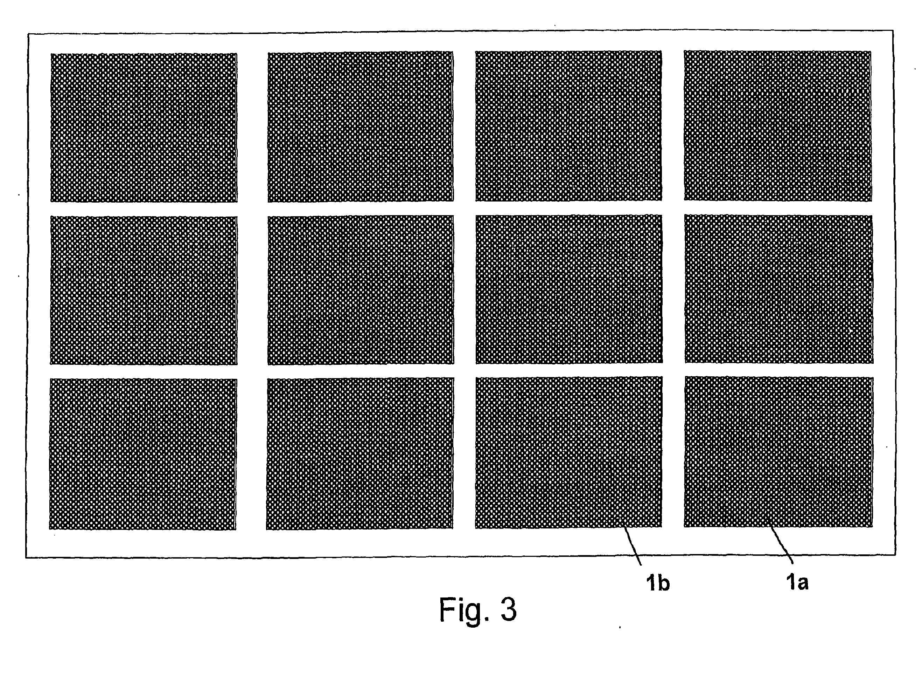

Fign. 2 und 3 zeigen Draufsichten auf erfindungsgemäße Polymermembrane mit darauf angeordneten Katalysatorsegmenten. Hierbei zeigt Fig. 2 ein 3x1-Feld von Katalysatorsegmenten, Fig. 3 zeigt ein 3x4-Feld von Katalysatorsegmenten. Sämtliche der rechteckigen Katalysatorsegmenten stellen hierbei eine Fläche von jeweils verschiedenen Brennstoffzelleneinheiten dar, welche seriell miteinander verschaltet sind.

## Patentansprüche

1. Verfahren zum Herstellen einer zumindest einseitig bereichsweise mit einer Katalysatorschicht versehenen Polymermembran (2), wobei eine homogen auf der Polymermembran aufgetragene Katalysatorschicht zur Schaffung von einander getrennten Katalysatorsegmenten (1a, 1b; 2a, 2b) bereichsweise entfernt wird, **dadurch gekennzeichnet, dass** beidseitig der Polymermembran eine Katalysatorschicht gegeben ist und die Polymermembran eine so große Transmission aufweist, dass die beidseitig der Polymermembran liegende Katalysatorschicht durch Laserbestrahlung von lediglich einer Seite der beschichteten Polymermembran aus beidseitig bereichsweise entfernt wird.

2. Verfahren nach einem der vorhergehenden Ansprüche, **dadurch gekennzeichnet, dass** die Katalysatorschicht porös ist und aus Edelmetallpartikeln, Graphit sowie einem Protonen leitenden Polymer besteht.

3. Verfahren nach einem der vorhergehenden Ansprüche, **dadurch gekennzeichnet, dass** die Dicke der unabgetragenen homogenen Katalysatorschicht vor dem bereichsweisen Abtragen 5 - 10 µm beträgt.

4. Verfahren nach einem der vorhergehenden Ansprüche, **dadurch gekennzeichnet, dass** die noch nicht bereichsweise abgetragene Polymermembran (3) beidseitig homogen mit einer Katalysatorschicht versehen ist.

5. Verfahren nach einem der vorhergehenden Ansprüche, **dadurch gekennzeichnet, dass** voneinander getrennte Katalysatorsegmente (1a, 1b) jeweils Katalysatorflächen zweier benachbarter Brennstoffzellen einer planaren Brennstoffzellenanordnung darstellen.

6. Verfahren nach einem der Ansprüche 1 bis 4, **dadurch gekennzeichnet, dass** mindestens drei getrennte Katalysatorsegmente vorgesehen sind, welche ein zweidimensionales Feld von Brennstoffzellen einer planaren Brennstoffzellenanordnung bilden.

7. Verfahren nach einem der vorhergehenden Ansprüche, **dadurch gekennzeichnet, dass** eine vollständige Entfernung der Katalysatorschicht im Bereich zwischen den Katalysatorsegmenten (1a, 1b) erfolgt.

8. Verfahren nach einem der Ansprüche 1 bis 6, **dadurch gekennzeichnet, dass** im Bereich zwischen den Katalysatorsegmenten (1a, 1b) der Abtrag der Katalysatorschicht nicht vollständig erfolgt.

9. Verfahren nach einem der vorhergehenden Ansprüche, **dadurch gekennzeichnet, dass** der Abstand zwischen den einzelnen Katalysatorsegmenten (1a, 1b) 10mal größer ist als die Dicke der Polymermembran (3) ohne Katalysatorschicht.

10. Verfahren nach einem der Ansprüche 1 bis 8, **dadurch gekennzeichnet, dass** durch Elektrodenätzung oder lokale thermische Behandlung die Ionenstromleitfähigkeit der Polymermembran (3) vermindert oder beseitigt wird.

11. Verfahren nach einem der vorhergehenden Ansprüche, **dadurch gekennzeichnet, dass** in den Bereichen der entfernten Katalysatorschicht eine Hydrophobierung erfolgt.

12. Protonenleitende Polymermembran, welche zumindest einseitig mit einer auf dieser mindestens einen Seite angebrachten porösen und aus Edelmetallpartikeln, Graphit sowie einem Protonen leitenden Polymer bestehenden Katalysatorschicht versehen ist, welche aus mindestens zwei auf der Fläche voneinander getrennten Katalysatorsegmenten besteht, **dadurch gekennzeichnet, dass** der Abstand dieser Katalysatorsegmente kleiner als 0,5 mm beträgt.

13. Planare Mikrobrennstoffzellenanordnung, enthaltend eine Protonen leitende Polymermembran nach Patentanspruch 12 bzw. eine nach den Ansprüchen 1 bis 11 hergestellte beschichtete Polymermembran.

## Claims

1. A method for manufacturing a polymer membrane (2) which at least on one side in regions is provided with a catalyst layer, wherein the catalyst layer deposited homogeneously on the polymer membrane is removed in regions for creating catalyst segments (1a, 1b; 2a, 2b) which are separated from one another, **characterised in that** the catalyst layer is given on both sides of the polymer membrane and the transmission of the polymer membrane is such that the catalyst layers on both sides of the polymer membrane are removed in regions by laser ablation from only one side of the polymer membrane.

2. A method according to claim 1, **characterised in that** the catalyst layer is porous and consists of precious metal particles, graphite as well as a proton-conductive polymer.

3. A method according to one of the preceding claims, **characterized in that** the thickness of the homogeneous catalyst layer which has not been removed is 5 - 10 µm before the regional removal.

4. A method according to one of the preceding claims, **characterised in that** the polymer membrane (3) which has not yet been regionally removed is provided homogeneously on both sides with a catalyst layer.

5. A method according to one of the preceding claims, **characterised in that** catalyst segments (1a, 1b) which are separate from one another in each case represent catalyst surfaces of two adjacent fuel cells of a planar fuel cell arrangement.

6. A method according to one of the claims 1 to 4, **characterised in that** a t least three separate catalyst segments are provided which form a two-dimensional field of fuel cells of a planar fuel cell arrangement.

7. A method according to one of the preceding claims, **characterised in that** a complete removal of the catalyst layer is effected in the region between the catalyst segments (1a, 1b).

8. A method according to one of the claims 1 to 6, **characterised in that** the removal of the catalyst layer is not completely effected in the region between the catalyst segments (1a, 1b).

9. A method according to one of the preceding claims, **characterised in that** the distance between the individual catalyst segments (1a, 1b) is 10 times larger than the thickness of the polymer membrane (3) without catalyst layer.

10. A method according to one of the claims 1 to 8, **characterised in that** the ion conductivity of the polymer membrane (3) is reduced or stopped by way of electrode etching or by way of local thermal treatment.

11. A method according to one of the preceding claims, **characterised in that** a hydrophobisation is effected in the regions of the removed catalyst layer.

12. A proton-conductive polymer membrane which at least on one side is provided with a porous catalyst layer consisting of precious metal particle, graphite as well as a proton-conducting polymer, deposited on this at least one side, which consists of at least two catalyst segments which are separate from one another on the surface, **characterised in that** the distance of these catalyst segments is smaller than 0,5 mm.

13. A planar microfuel cell arrangement, containing a proton-conductive polymer membrane according to patent claim 12 or a coated polymer membrane manufactured according to one of the claims 1 to 11.

## Revendications

1. Procédé de fabrication d'une membrane polymère (2) dotée d'une couche catalytique par zone au moins sur une face, dans lequel une couche catalytique déposée de manière homogène sur la membrane polymère est retirée par zone pour créer des segments de catalyseur séparés les uns des autres (1a, 1b ; 2a, 2b), **caractérisé en ce que**, sur les deux faces de la membrane polymère, une couche catalytique est prévue et la membrane polymère présente une transmission tellement grande que la couche catalytique reposant sur les deux faces de la membrane polymère est retirée par zone des deux côtés par irradiation laser d'une seule face de la membrane polymère revêtue.

2. Procédé selon l'une quelconque des revendications précédentes, **caractérisé en ce que** la couche catalytique est poreuse et se compose de particules de métaux précieux, de graphite ainsi que d'un polymère conducteur de protons.

3. Procédé selon l'une des revendications précédentes, **caractérisé en ce que** l'épaisseur de la couche catalytique homogène non retirée atteint, avant les retraits par zone, 5 à 10 µm.

4. Procédé selon l'une des revendications précédentes, **caractérisé en ce que** la membrane polymère (3), qui n'a pas encore été retirée par zone, est dotée de manière homogène d'une couche catalytique sur les deux faces.

5. Procédé selon l'une des revendications précédentes, **caractérisé en ce que** les segments de catalyseur (1a, 1b) séparés les uns des autres représentent respectivement des surfaces de catalyseur de deux piles à combustible, adjacentes d'un arrangement de piles à combustible plan.

6. Procédé selon l'une des revendications 1 à 4, **caractérisé en ce que** l'on prévoit au moins trois segments de catalyseur séparés qui forment un champ bidimensionnel de piles à combustible d'un arrangement de piles à combustibles plan.

7. Procédé selon l'une des revendications précédentes, **caractérisé en ce qu'**une élimination totale de la couche catalytique s'effectue dans la zone entre les segments de catalyseur (1a, 1b).

8. Procédé selon l'une des revendications 1 à 6, **caractérisé en ce que** l'enlèvement de la couche catalytique ne s'effectue pas complètement dans la zone entre les segments de catalyseur (1a, 1b).

9. Procédé selon l'une des revendications précédentes, **caractérisé en ce que** la distance entre les différents segments de catalyseur (1a, 1b) est 10 fois plus importante que l'épaisseur de la membrane polymère (3) sans la couche catalytique.

10. Procédé selon l'une des revendications 1 à 8, **caractérisé en ce que** l'on réduit ou l'on supprime la conductivité de courant ionique de la membrane polymère (3) par gravure des électrodes ou traitement thermique local.

11. Procédé selon l'une des revendications précédentes, **caractérisé en ce qu'**une hydrophobisation s'effectue dans les zones de la couche catalytique retirée.

12. Membrane polymère conductrice de protons, qui est dotée au moins sur une face d'une couche catalytique poreuse, déposée sur cette face au moins, et constituée de particules de métaux précieux, de graphite ainsi que d'un polymère conducteur de protons, ladite couche catalytique se composant d'au moins deux segments de catalyseur séparés l'un de l'autre sur la surface, **caractérisée en ce que** la distance entre ces segments de catalyseur est inférieure à 0,5 mm.

13. Arrangement de micropiles à combustible plan, contenant une membrane polymère conductrice de protons selon la revendication 12 ou une membrane polymère revêtue fabriquée selon les revendications 1 à 11.
